# EUROPEAN PATENT SPECIFICATION

(11) **EP 2 837 673 B1**
(45) Date of publication and mention of the grant of the patent: **10.05.2023**
(21) Application number: 14179469.3
(22) Date of filing: 01.08.2014
(51) Int. Cl.: C10G 1/00, C01B 3/00, C10B 53/06, C10G 47/00, C10G 1/02, C10K 1/00, C01B 3/38

(54) **Method for treating gas from an oil shale rock process**
Verfahren zur Behandlung von Gasen aus einem Ölschiefergesteinsverfahren
Procédé de traitement de gaz provenant d'un processus de roche de schiste bitumineux

(30) Priority: 01.08.2013 US 201361861073 P
(43) Date of publication of application: 18.02.2015
(73) Proprietor: Linde GmbH, 82049 Pullach (DE)
(72) Inventor: Maier, Alexander, 83607 Holzkirchen Oberbay (DE); Schwarzhuber, Josef, 85283 Wolnzach (DE); Heinzel, Albrecht, 81479 München (DE)
(74) Representative: Fischer, Werner

(56) References cited:
- AU-A- 3 407 793
- US-A- 3 617 472
- US-A- 4 353 418

## Description

### Technical field of the present invention

The present invention relates to a method for the treatment of retort-off gas from a shale oil production process.

### Technological background of the present invention

Shale oil is a substitute for conventional crude oil and is becoming a more important source of oil as crude oil prices continue to rise. Shale oil is already a well established industry in Estonia, and China and other countries such as Brazil, Germany and Russia are beginning to use shale oil.

Shale oil is obtained by mining and processing oil shale, also known as kerogen shale, which is a fine-grained, organic rich sedimentary rock found in deposits around the world.

Shale oil (also referred to as synthetic crude oil) is produced by pyrolysis of mined oil shale in a retort furnace that converts the kerogen in the oil shale to the desired shale oil. In particular, the pyrolysis process separates the hydrocarbons from the rest of the matter making up the oil shale.

The bound macro molecules of organic matter decompose into smaller molecules which are degassed from the oil shale.

The remaining pyrolysis product is then cooled so that the higher hydrocarbons condense into a liquid phase that is unrefined shale oil. This shale oil product can then be further treated for conversion into high valuable fuels and chemicals.

The degassed, non-condensable fraction from the pyrolysis process is referred to as retort-off gas.

The refining of shale oil into desired fuels and chemicals requires hydrogen, which is generally supplied from natural gas or naphtha. These hydrogen sources are generally not available at the oil shale processing sites, and therefore must be imported at considerable expense. Known processes are disclosed in AU 34077/93 A, US 3,617,472 and US 4,353,418.

For all of the above reasons, there remains a need in the art for improvements to the refining of shale oil that has been pyrolyzed from oil shale.

### Disclosure of the present invention: object, solution, advantages

Taking the prior art as discussed into account, an object of the present invention is to overcome problems that earlier methods have experienced. This object is accomplished by a method comprising the features of claim 1. Advantageous embodiments and expedient improvements of the present invention are disclosed in the dependent claims.

The present invention basically provides for an improved method for treating gas from an oil shale rock process, in particular for an improved method for the refining of shale oil by utilizing the retort-off gas from an oil shale pyrolysis process as a source of hydrogen.

The retort-off gas from a shale oil processing facility, in particular from the pyrolysis process for converting oil shale to shale oil (synthetic crude oil), can be used as a source of hydrogen for a shale oil refining and upgrading process; in particular, hydrogen can be produced from the retort-off gas in a steam reformer.

However, the retort-off gas in addition to the desired saturated hydrocarbons also contains several impurities, such as sulfur components, carbon oxides, for example carbon dioxide (CO₂), traces of heavy metals and unsaturated hydrocarbons.

These impurities need to be removed from the retort-off gas prior to hydrogen production in the steam reformer in order to avoid coke formation, catalyst deactivation and metal dusting.

Thus, the retort-off gas is treated to remove impurities and then serves as a feed stock to the steam reformer for producing hydrogen used in the further refining and upgrading of the shale oil.

According to an embodiment of the present invention, the retort-off gas is processed as follows in order to convert the retort-off gas to usable steam reformer feedstock:
- stage 1: desulfurization;
- stage 2: heavy metal removal;
- stage 3: shift conversion to carbon dioxide (CO₂), in particular sweet shift;
- stage 4: carbon dioxide (CO₂) removal;
- stage 5: hydrogenation of unsaturated hydrocarbons;
- stage 6: ultra-desulfurization;
- stage 7: pre-reforming.

Alternatively, the processing of the retort-off gas may not require all of the stages listed above. Therefore, the present invention also relates to processing retort-off gas in a process according to claim 1.

In a retort-off gas treatment method according to the present invention, the retort-off gas is processed as follows.
- stage 1: shift conversion to carbon dioxide (CO₂), in particular sweet shift or sour shift, for example depending on the sulfur concentration;
- stage 2: acid gas removal [carbon dioxide (CO₂) and if present also sulfur components];
- stage 3: hydrogenation of unsaturated hydrocarbons.

The present invention uses the retort-off gas from an oil shale pyrolysis process as a source of hydrogen for further refining of shale oil. This overcomes the need for importing natural gas or naphtha to the shale oil processing facility and results in significant cost savings.

### Brief description of the drawings

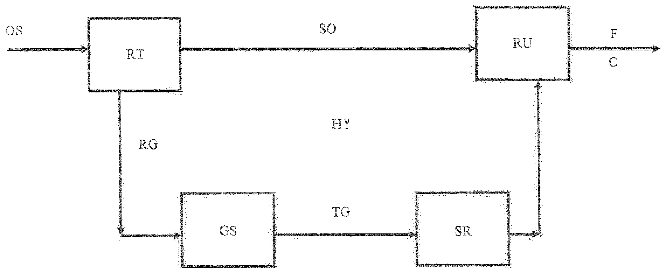

For a more complete understanding of the present embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figure taken in conjunction with the following description of the embodiments, of which:
The drawing figure provides a schematic view of the method or process of the present invention.

### Detailed description of the drawings; best way of embodying the present invention

Before describing the present inventive embodiments in detail, it is to be understood that the inventive embodiments are not limited in their application to the details of construction and arrangement of parts illustrated in the accompanying drawing figure, since the present invention is capable of other embodiments and of being practiced or carried out in various ways. Also, it is to be understood that the phraseology or terminology employed herein is for the purpose of description and not of limitation.

The present invention will be further described with reference to the drawing figure.

Oil shale OS is supplied to an oil shale retort process RT, which converts the oil shale OS into shale oil SO (synthetic crude oil) and a retort-off gas RG.

The retort-off gas RG is treated in one or more retort-off gas treatment units GS in accordance with the various stages outlined above to create treated retort-off gas TG.

The treated retort-off gas TG is then used as a feed stock to a steam reformer SR for the production of hydrogen HY.

The hydrogen HY produced is used for further refining and upgrading of the shale oil SO produced by the oil shale retort process RT.

This is carried out in a shale oil refining and upgrading unit RU and produces the desired fuels F or chemical products C.

The step of treating GS the retort-off gas RG
- in order to remove impurities and/or
- in order to convert the retort-off gas RG to a usable feedstock of the steam reformer SR may comprise the process(es) as outlined in claim 2 and/or in claim 3 and/or in claim 6 and/or in claim 7 and/or in claim 8.

The step of treating GS the retort-off gas RG
- in order to remove impurities and/or
- in order to convert the retort-off gas RG to a usable feedstock of the steam reformer SR according to claim 1 comprises the following processes:
   - process 1: shift conversion to carbon dioxide (CO₂), in particular sweet shift or sour shift, for example depending on the sulfur concentration;
   - process 2: acid gas removal [carbon dioxide (CO₂) and if present also sulfur components];
   - process 3: hydrogenation of unsaturated hydrocarbons.

The present invention provides many advantages:
In particular, by using the retort-off gas as the steam reformer feed stock, the need to import naphtha or natural gas to the shale oil processing facility is eliminated. This may result in significant cost savings for the shale oil processing facility.

Further, the retort-off gas is more economically utilized. While the retort-off gas can be used as a fuel source, such as a fuel source for the steam reformer or other fuel needs of the shale oil processing facility, the retort-off gas is much more valuable as a feedstock material for formation of hydrogen from the steam reformer. This again provides cost savings for the shale oil processing facility.

It is anticipated that other embodiments and variations of the present invention will become readily apparent to the skilled artisan in the light of the foregoing description, and it is intended that such embodiments and variations likewise be included within the scope of the present invention as set out in the appended claims.

### List of reference numerals

- C: chemical, in particular chemical product, for example high value chemical product
- F: fuel, in particular fuel product, for example high value fuel product
- GS: retort-off gas treatment process or retort-off gas treatment unit
- HY: hydrogen
- OS: oil shale
- RG: retort-off gas (stream)
- RT: oil shale retort process or oil shale retort unit
- RU: shale oil refining and upgrading process or shale oil refining and upgrading unit
- SO: shale oil (stream) or synthetic crude oil (stream)
- SR: steam reformer
- TG: treated retort-off gas (stream)

## Claims

1. A method of treating gas from a shale oil processing facility comprising:
- treating oil shale (OS) in an oil shale retort (RT) process to produce shale oil (SO) and retort-off gas (RG) streams;
- treating (GS) the retort-off gas (RG) stream to remove impurities and to produce a treated retort-off gas (TG) stream, said treating (GS) comprising
-- shift conversion to carbon dioxide (CO₂),
-- acid gas removal of carbon dioxide (CO₂) and/or of sulfur components, and
-- hydrogenation of unsaturated hydrocarbons;
- feeding the treated retort-off gas (TG) stream to a steam reformer (SR) to produce hydrogen (HY);
- feeding the hydrogen (HY) to a shale oil refining and upgrading (RU) process; and
- treating the shale oil (SO) stream from the oil shale retort (RT) process in the shale oil refining and upgrading (RU) process to convert the shale oil (SO) to at least one fuel (F) and/or to at least one chemical (C).

2. The method according to claim 1 wherein the step of treating (GS) the retort-off gas (RG) stream to remove impurities comprises treating the retort-off gas stream by the process of desulfurization.

3. The method according to claim 1 or 2 wherein the step of treating (GS) the retort-off gas (RG) stream to remove impurities comprises treating the retort-off gas stream by the process of heavy metal removal.

4. The method according to at least one of claims 1 to 3 wherein the shift conversion is a sweet shift or a sour shift.

5. The method according to at least one of claims 1 to 3 wherein the shift conversion depends on the sulfur concentration.

6. The method according to at least one of claims 1 to 5 wherein the step of treating (GS) the retort-off gas (RG) stream to remove impurities comprises treating the retort-off gas stream by the process of carbon dioxide (CO₂) removal.

7. The method according to at least one of claims 1 to 6 wherein the step of treating (GS) the retort-off gas (RG) stream to remove impurities comprises treating the retort-off gas stream by the process of ultra-desulfurization.

8. The method according to at least one of claims 1 to 7 wherein the step of treating (GS) the retort-off gas (RG) stream to remove impurities comprises treating the retort-off gas stream by the process of pre-reforming.

## Patentansprüche

1. Verfahren zum Behandeln von Gas aus einer Schieferölverarbeitungsanlage, aufweisend:
- Behandeln von Ölschiefer (OS) in einem Ölschiefer-Retorten (RT)-Prozess zum Erzeugen von Schieferöl (SO)- und Retortenabgas (RG)-Strömen;
- Behandeln (GS) des Retortenabgas (RG)-Stroms zum Entfernen von Verunreinigungen und zum Erzeugen eines behandelten Retortenabgas (TG)-Stroms, wobei das Behandeln (GS) aufweist:
- Shift-Konvertierung zu Kohlendioxid (CO₂),
- Sauergas-Entfernung von Kohlendioxid (CO₂) und/oder von Schwefelkomponenten, und
- Hydrierung von ungesättigten Kohlenwasserstoffen;
- Zuführen des behandelten Retortenabgas (TG)-Stroms zu einem Dampfreformer (SR) zum Erzeugen von Wasserstoff (HY);
- Einspeisen des Wasserstoffs (HY) in einen Schieferöl-Raffinations- und Veredelungs (RU)-Prozess; und
- Behandeln des Schieferöl (SO)-Stroms aus dem Ölschiefer-Retorten (RT)-Prozess im Schieferöl-Raffinations- und Veredelungs (RU)-Prozess, um das Schieferöl (SO) in mindestens einen Brennstoff (F) und/oder in mindestens eine Chemikalie (C) umzuwandeln.

2. Verfahren gemäß Anspruch 1, wobei der Schritt des Behandelns (GS) des Retortenabgas (RG)-Stroms zum Entfernen von Verunreinigungen ein Behandeln des Retortenabgas-Stroms durch einen Prozess der Entschwefelung aufweist.

3. Verfahren gemäß Anspruch 1 oder 2, wobei der Schritt des Behandelns (GS) des Retortenabgas (RG)-Stroms zum Entfernen von Verunreinigungen ein Behandeln des Retortenabgas-Stroms durch einen Prozess der Schwermetallentfernung aufweist.

4. Verfahren gemäß mindestens einem der Ansprüche 1 bis 3, wobei die Shift-Konvertierung eine Süß-Shift oder eine Sauer-Shift ist.

5. Verfahren gemäß mindestens einem der Ansprüche 1 bis 3, wobei die Shift-Konvertierung von der Schwefelkonzentration abhängt.

6. Verfahren gemäß mindestens einem der Ansprüche 1 bis 5, wobei der Schritt des Behandelns (GS) des Retortenabgas (RG)-Stroms zum Entfernen von Verunreinigungen ein Behandeln des Retortenabgas-Stroms durch einen Prozess der Entfernung von Kohlendioxid (CO₂) aufweist.

7. Verfahren gemäß mindestens einem der Ansprüche 1 bis 6, wobei der Schritt des Behandelns (GS) des Retortenabgas (RG)-Stroms zum Entfernen von Verunreinigungen ein Behandeln des Retortenabgas-Stroms durch einen Prozess der Ultra-Entschwefelung aufweist.

8. Verfahren gemäß mindestens einem der Ansprüche 1 bis 7, wobei der Schritt des Behandelns (GS) des Retortenabgas (RG)-Stroms zum Entfernen von Verunreinigungen ein Behandeln des Retortenabgas-Stroms durch einen Prozess der Vorreformierung aufweist.

## Revendications

1. Procédé de traitement de gaz provenant d'une installation de traitement d'huile de schiste, comprenant :
- traitement de schiste bitumineux (OS) dans un processus de retort de schiste bitumineux (RT) pour produire des flux d'huile de schiste (SO) et de gaz de retort (RG) ;
- traitement (GS) du flux de gaz de retort (RG) pour éliminer des impuretés et pour produire un flux de gaz de retort traité (TG), ledit traitement (GS) comprenant :
- conversion de shift en dioxyde de carbone (CO₂),
-- gaz acide élimination du dioxyde de carbone (CO₂) et/ou des composants du soufre, et
- hydrogénation d'hydrocarbures insaturés ;
- introduction du flux de gaz de retort traité (TG) dans un reformeur à vapeur (SR) pour produire hydrogène (HY) ;
- introduction de l'hydrogène (HY) dans un processus de raffinage et de valorisation de l'huile de schiste (RU) ; et
- traitement du flux de l'huile de schiste (SO) provenant du processus de retort de schiste bitumineux (RT) dans le processus de raffinage et de valorisation de l'huile de schiste (RU) pour convertir l'huile de schiste (SO) en au moins un carburant (F) et/ou en au moins un produit chimique (C).

2. Procédé selon la revendication 1, où l'étape de traitement (GS) du flux de gaz de retort (RG) pour éliminer des impuretés comprend le traitement du flux de gaz de retort par le processus de désulfuration.

3. Procédé selon la revendication 1 ou 2, où l'étape de traitement (GS) du flux de gaz de retort (RG) pour éliminer des impuretés comprend le traitement du flux de gaz de retort par le processus d'élimination de métal lourd.

4. Procédé selon au moins une des revendications 1 à 3, où la conversion de shift est un shift doux ou un shift acide.

5. Procédé selon au moins une des revendications 1 à 3, où la conversion de shift dépend de la concentration en soufre.

6. Procédé selon au moins une des revendications 1 à 5, où l'étape de traitement (GS) du flux de gaz de retort (RG) pour éliminer des impuretés comprend le traitement du flux de gaz de retort par le processus d'élimination de dioxyde de carbone (CO₂).

7. Procédé selon au moins une des revendications 1 à 6, où l'étape de traitement (GS) du flux de gaz de retort (RG) pour éliminer des impuretés comprend le traitement du flux de gaz de retort par le processus d'ultra-désulfuration.

8. Procédé selon au moins une des revendications 1 à 7, où l'étape de traitement (GS) du flux de gaz de retort (RG) pour éliminer des impuretés comprend le traitement du flux de gaz de retort par le processus de préformage.
